# FASCICULE DE BREVET EUROPEEN

(11) **EP 3 555 816 B1**
(45) Date de publication et mention de la délivrance du brevet: **08.11.2023**
(21) Numéro de dépôt: 17832489.3
(22) Date de dépôt: 13.12.2017
(51) Int. Cl.: G06N 3/045, G06N 3/09, G06F 18/2413, G06V 40/12, G06V 10/764, G06V 10/82, G06N 3/0464

(54) **PROCÉDÉ DE DÉTERMINATION DE L'APPARTENANCE D'UNE DONNÉE À UNE BASE DE DONNÉES ET PRODUIT PROGRAMME D'ORDINATEUR ET SUPPORT D'INFORMATIONS ASSOCIÉS**
VERFAHREN ZUR BESTIMMUNG DER MITGLIEDSCHAFT EINES DATENSATZES EINER DATENBANK UND ZUGEHÖRIGES COMPUTERPROGRAMMPRODUKT UND INFORMATIONSMEDIUM
METHOD FOR DETERMINING A DATA ITEM'S MEMBERSHIP OF A DATABASE AND ASSOCIATED COMPUTER PROGRAM PRODUCT AND INFORMATION MEDIUM

(30) Priorité: 15.12.2016 FR 1601785
(43) Date de publication de la demande: 23.10.2019
(73) Titulaire: Thales, 92400 Courbevoie (FR)
(72) Inventeur: BERTRAND, Pierre, 92622 Gennevilliers Cedex (FR); HUYOT, Benoît, 92622 Gennevilliers Cedex (FR); CREMER, Sandra, 78141 Velizy Cedex (FR)
(74) Mandataire: Lavoix
(86) Numéro de dépôt international: PCT/EP2017/082673
(87) Numéro de publication internationale: WO 2018/109030

(56) Documents cités:
- US-B1- 9 436 895
- XUFENG HAN ET AL: "MatchNet: Unifying feature and metric learning for patch-based matching", 2015 IEEE CONFERENCE ON COMPUTER VISION AND PATTERN RECOGNITION (CVPR), IEEE, 7 juin 2015 (2015-06-07), pages 3279-3286, XP032793776, DOI: 10.1109/CVPR.2015.7298948
- ZAGORUYKO SERGEY ET AL: "Learning to compare image patches via convolutional neural networks", 2015 IEEE CONFERENCE ON COMPUTER VISION AND PATTERN RECOGNITION (CVPR), IEEE, 7 juin 2015 (2015-06-07), pages 4353-4361, XP032793890, DOI: 10.1109/CVPR.2015.7299064
- MARASCO EMANUELA ET AL: "Robust and interoperable fingerprint spoof detection via convolutional neural networks", 2016 IEEE SYMPOSIUM ON TECHNOLOGIES FOR HOMELAND SECURITY (HST), IEEE, 10 mai 2016 (2016-05-10), pages 1-6, XP032960753, DOI: 10.1109/THS.2016.7568925

## Description

La présente invention concerne un procédé de détermination de l'appartenance d'une donnée à une base de données. La présente invention se rapporte aussi à un produit programme d'ordinateur et un support d'informations associés.

Dans le domaine identitaire, il est souhaitable d'éviter la délivrance de deux cartes d'identité pour la même personne. Pour la vérification, il convient ainsi de pouvoir répondre à la question suivante : étant données deux images d'empreintes digitales, proviennent-elles du même doigt ?

Pour cela, il est connu une technique reposant sur une base de données contenant des empreintes digitales. La technique consiste à extraire des minuties de l'image des empreintes digitales et à effectuer des comparaisons par le biais des minuties extraites.

Toutefois, une telle technique présente une vitesse d'exécution trop lente.

Des techniques d'analyse d'images sont, par ailleurs connus de l'article de Xufeng HAN et al. intitulé « MatchNet : Unifying feature and Metric Learning for Patch-Based Matching », de l'article de Sergey ZAGORUYKO et al. intitulé « Learning to compare image patches via convolutional neural networks », du document US 9 436 895 et de l'article d'Emanuela MARASCO et al. intitulé « Robust and interoperable fingerprint spoof détection via convolutional neural networks ».

Il existe donc un besoin pour un procédé de détermination de l'appartenance d'une donnée à une base de données qui soit de mise en oeuvre plus rapide.

A cet effet, il est proposé un procédé de détermination selon la revendication 1.

Suivant des modes de réalisation particuliers, le procédé de détermination comprend une ou plusieurs des caractéristiques des revendications 2 à 6, prise(s) isolément ou suivant toute combinaison techniquement possible.

Il est aussi proposé un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que décrit précédemment lorsque le programme d'ordinateur est mis en oeuvre sur l'unité de traitement des données.

Il est également proposé un support lisible d'informations comportant des instructions de programme formant un programme d'ordinateur, le programme d'ordinateur étant chargeable sur une unité de traitement de données et adapté pour entraîner la mise en oeuvre d'un procédé tel que décrit précédemment lorsque le programme d'ordinateur est mis en oeuvre sur l'unité de traitement des données.

D'autres caractéristiques et avantages de l'invention apparaîtront à la lecture de la description qui suit des modes de réalisation de l'invention, donnée à titre d'exemple uniquement et en référence aux dessins qui sont :
- figure 1, une vue schématique d'un exemple de système permettant la mise en oeuvre d'un procédé de détermination de l'appartenance d'une donnée à une base de données, et
- figure 2, une représentation en schéma-bloc d'une partie d'un exemple de mise en oeuvre d'un procédé de détermination de l'appartenance d'une donnée à une base de données.

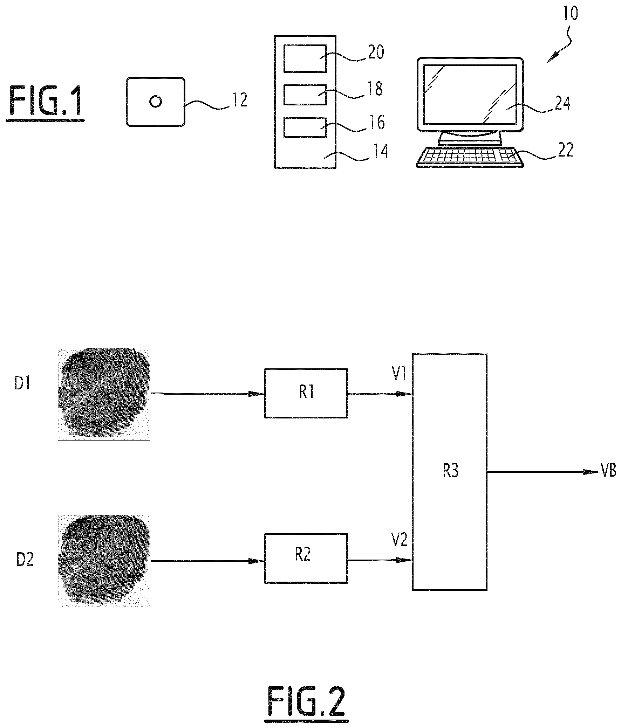

Un système 10 et un produit programme d'ordinateur 12 sont représentés à la figure 1. L'interaction du produit programme d'ordinateur 12 avec le système 10 permet de mettre en oeuvre un procédé de détermination de l'appartenance d'une donnée à une base de données.

Le système 10 est un ordinateur.

Plus généralement, le système 10 est un calculateur électronique propre à manipuler et/ou transformer des données représentées comme des quantités électroniques ou physiques dans des registres du système 10 et/ou des mémoires en d'autres données similaires correspondant à des données physiques dans des mémoires, des registres ou d'autres types de dispositifs d'affichage, de transmission ou de mémorisation.

Le système 10 comporte un processeur 14 comprenant une unité de traitement de données 16, des mémoires 18 et un lecteur 20 de support d'informations. Le système 10 comprend également un clavier 22 et une unité d'affichage 24.

Le produit programme d'ordinateur 12 comporte un support lisible d'informations 20.

Un support lisible d'informations 20 est un support lisible par le système 10, usuellement par l'unité de traitement de données 14. Le support lisible d'informations 20 est un médium adapté à mémoriser des instructions électroniques et capables d'être couplé à un bus d'un système informatique.

A titre d'exemple, le support lisible d'informations 20 est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 20 est mémorisé un programme d'ordinateur comprenant des instructions de programme.

Le programme d'ordinateur est chargeable sur l'unité de traitement de données 14 et est adapté pour entraîner la mise en oeuvre d'un procédé de détermination de l'appartenance d'une donnée à une base de données lorsque le programme d'ordinateur est mis en oeuvre sur l'unité de traitement des données 14.

Le fonctionnement du système 10 en interaction avec le produit programme d'ordinateur 12 est maintenant décrit en référence à la figure 2 qui illustre schématique une partie d'un exemple de mise en oeuvre d'un procédé de détermination de l'appartenance d'une donnée à une base de données.

La détermination de l'appartenance d'une donnée à une base de données est utilisée pour de nombreuses applications.

Par exemple, cela permet d'identifier une panne d'un système par identification de photos, grâce à une base de donnée avec des photos du système correspondant à une pluralité de panne ou si une carte d'identité a déjà été délivrée pour une empreinte digitale donnée.

Dans de tels contextes, les données sont des images, des données biométriques ou des empreintes digitales.

Dans l'exemple représenté sur la figure 2, les données sont des empreintes digitales.

Par ailleurs, le nombre de données dans la base de données est supérieur ou égal à 1 millions de données, préférentiellement supérieure à 10 millions de données. Le procédé de détermination comporte trois phases : une phase d'apprentissage, une phase de préparation et une phase d'exploitation.

La phase d'apprentissage comporte une étape de fourniture, une étape d'optimisation et une étape de création.

Lors de l'étape de fourniture, il est fourni un critère de performance souhaité.

Par exemple, un opérateur rentre via le clavier 22 un critère de performance à respecter : type erreur < 1% par exemple.

Selon un premier exemple, le critère de performance est un critère de précision et de vitesse qui est décrit plus précisément dans ce qui suit.

En variante, le critère de performance est le taux de faux négatifs pour éviter les faux-rejets. Un tel critère est particulièrement utile en cas de couplage comme présélection avec une méthode classique comme décrit ultérieurement.

A l'issue de l'étape de fourniture, un critère de performance souhaité est connu.

Lors de l'étape de création, il est créé une base d'apprentissage à partir de la base de données.

La base d'apprentissage est une base contenant un ensemble de paires de données assorties d'un label binaire : l'information d'identité entre les deux données.

La base d'apprentissage comporte ainsi des paires de données d'apprentissage à comparer.

Dans l'exemple proposé, la base d'apprentissage comprend entre 50 000 paires et 150 000 paires, de préférence entre 90 000 paires et 110 000 paires.

Par exemple, l'information d'identité est une valeur binaire valant 0 lorsque les deux données sont distinctes et 1 lorsque les deux données sont identiques.

La création est mise en oeuvre par sélection de données de la base de données. De préférence, la sélection est aléatoire.

La sélection est effectuée de sorte qu'une portion comprise entre 45% et 50% des paires faisant partie de la base d'apprentissage soient des paires identiques ; cette proportion permet de ne pas accorder plus de poids aux faux-négatifs qu'aux faux-positifs et peut être modifiée.

La base d'apprentissage créé est ensuite mémorisée dans une des mémoires 18.

A l'issue de l'étape de création, la base d'apprentissage est disponible.

Il est ensuite mis en oeuvre une étape d'optimisation.

L'optimisation est appliquée sur trois réseaux de neurones R1, R2 et R3 qui sont visibles sur la figure 2.

L'optimisation vise à obtenir trois réseaux de neurones appris R1, R2 et R3 à partir de la base d'apprentissage.

Le premier réseau de neurones R1 est propre à extraire d'une première donnée D1 d'une paire de la base d'apprentissage un premier vecteur de caractéristiques. Le premier vecteur de caractéristiques est noté dans la suite premier vecteur V1.

Chaque composante du premier vecteur V1 est une caractéristique relative à la première donnée D1.

Le deuxième réseau de neurones R2 est propre à extraire d'une deuxième donnée D2 d'une paire de la base d'apprentissage un deuxième vecteur de caractéristiques. Le deuxième vecteur de caractéristiques est noté dans la suite deuxième vecteur V2.

Chaque composante du deuxième vecteur V2 est une caractéristique relative à la deuxième donnée D2.

Comme expliqué précédemment, le premier réseau de neurones R1 et le deuxième réseau de neurones R2 sont des réseaux de détection de caractéristiques de données et d'extraction de certaines caractéristiques des caractéristiques détectables.

Le troisième réseau de neurones R3 est propre à effectuer un ensemble d'opérations transformant le couple du premier vecteur V1 et du deuxième vecteur V2 en une valeur binaire VB représentative de l'identité entre les deux données d'apprentissage D1 et D2.

Le troisième réseau de neurones R3 est ainsi un réseau de comparaison.

Dans l'exemple décrit, l'optimisation est effectuée selon deux contraintes.

La première contrainte est une contrainte de respect du critère de performance.

La deuxième contrainte est une contrainte selon laquelle le premier réseau de neurones R1 et le deuxième réseau de neurones R2 sont identiques.

Par le terme « identique » dans ce contexte, il est entendu une stricte identité, c'est-à-dire que la structure des neurones est identique et que les connexions entre neurones sont également identiques. Les connexions entre neurones sont parfois désignées sous le nom de « poids ».

En ce sens, le premier réseau de neurones R1 et le deuxième réseau de neurones R2 forment ensemble un réseau dit siamois.

En variante, l'optimisation est effectuée avec plus de deux contraintes.

Selon un autre exemple de contrainte, on peut demander au réseau complet d'être résistant au pruning (comprendre la suppression aléatoire de liens) ce qui a tendance à renforcer la généralisation de l'entraînement à une base de données plus grande.

L'optimisation est mise en oeuvre selon une technique de rétro propagation du gradient de l'erreur.

De fait, l'optimisation est mise en oeuvre itérativement, les réseaux de neurones R1, R2 et R3 étant modifiés à chaque itération jusqu'à obtenir une convergence.

En pratique, 100 itérations suffisent pour parvenir aux réseaux de neurones R1, R2 et R3 appris.

Dans l'exemple décrit, le premier réseau de neurones R1 et le deuxième réseau de neurones R2 sont des réseaux de neurones comportant une couche de neurones convolutionnels suivie d'une couche de neurones destinés à effectuer une mise en commun. Une succession de ces deux couches est alors répétée. Cette succession est suivie de couches de neurones entièrement connectés dits « fully-connected ».

La couche de neurones convolutionnels est propre à détecter des caractéristiques dans une donnée de type image, ce qui conduit à une dimension de caractéristiques très importante.

La couche de neurones destinée à effectuer une mise en commun est usuellement appelée couche « maxpooling ». Elle permet d'obtenir un vecteur de taille N inférieure à la taille de l'entrée et donc de condenser l'information.

Les couches de neurones entièrement connectés permettent de réduire le nombre de composantes du vecteur de N à P, P étant un nombre entier strictement inférieur à N. Une telle couche de neurones entièrement connectés est une couche dense ou « fully-connected ».

Par exemple, N est supérieur à 100 et P inférieur à 50. Pour une image ayant une taille de 128 par 180, N vaut 320 et P vaut 20.

En variante, le premier réseau de neurones R1 et le deuxième réseau de neurones R2 respectent au moins une propriété choisie dans un groupe de propriétés. Le groupe de propriétés est constitué de trois propriétés.

Selon une première propriété, le premier réseau de neurones R1 et le deuxième réseau de neurones R2 sont des réseaux de neurones comportant au moins une couche de neurones convolutionnels.

Selon une deuxième propriété, le premier réseau de neurones R1 et le deuxième réseau de neurones R2 sont des réseaux de neurones comportant au moins une couche de neurones entièrement connectés.

Selon une troisième propriété, le premier réseau de neurones R1 et le deuxième réseau de neurones R2 sont des réseaux de neurones comportant au moins une couche de neurones destinés à effectuer une mise en commun.

Selon une quatrième propriété, les poids du premier réseau de neurones R1 et du deuxième réseau de neurones R2 sont strictement identiques.

Selon l'exemple décrit, la première opération du troisième réseau de neurones R3 est la concaténation des deux vecteurs de caractéristiques V1 et V2.

En outre, le troisième réseau de neurones R3 est un réseau dont les neurones sont entièrement connectés entre chaque couche.

De plus, dans l'exemple décrit, le nombre de caractéristiques de chaque vecteur de caractéristiques V1 et V2 est une variable de l'étape d'optimisation.

En variante, la phase d'apprentissage comporte une étape de choix du nombre de caractéristiques de chaque vecteur, l'étape d'optimisation étant mise en oeuvre avec le nombre choisi.

L'étape d'optimisation est ainsi une étape apprentissage des trois réseaux de neurones R1, R2 et R3 par entraînement sur la base d'apprentissage.

A l'issue de l'étape d'optimisation, trois réseaux de neurones appris R1, R2 et R3 sont obtenus.

Le réseau de neurones combinant les trois réseaux de neurones appris R1, R2 et R3 respecte le critère de performance et le premier réseau de neurones R1 et le deuxième réseau de neurones R2 sont identiques.

Lors de la phase de préparation, il est préparé la base de données pour l'utiliser lors de la phase d'exploitation.

La phase de préparation comporte une étape d'application durant laquelle il est appliqué le premier réseau de neurones R1 sur chaque donnée de la base de données pour obtenir des vecteurs de caractéristiques de base.

Cela permet d'obtenir une nouvelle base de données, la nouvelle base de données associant à chaque donnée de la base de données un vecteur de caractéristiques de base.

A l'issue de la phase de préparation, une nouvelle base de données est obtenue.

La phase d'exploitation comporte une étape d'utilisation, une étape d'obtention, et une étape de sélection.

A l'étape d'utilisation, le premier réseau de neurones R1 est appliqué à une donnée à comparer. Un vecteur de caractéristiques à comparer est ainsi obtenu.

A l'étape d'obtention, pour chaque vecteur de caractéristiques de base, il est obtenu une valeur binaire VB représentative de l'identité entre la donnée à comparer et une donnée de la base de données.

La valeur binaire VB représentative de l'identité entre la donnée à comparer et une donnée de la base de données est obtenue par application du troisième réseau de neurones R3 au vecteur de caractéristiques de base (vecteurs de caractéristiques stockés en base) et au vecteur de caractéristiques à comparer.

A l'étape de sélection, il est sélectionné des données de la base de données pour lesquelles la valeur binaire VB obtenue correspond à une identité entre la donnée à comparer et les données de la base de données.

Le procédé de détermination permet l'accélération d'identification d'empreintes digitales, ce qui est une demande dans le domaine identitaire.

Le procédé de détermination propose d'obtenir une identification dont la vitesse et la précision sont réglables selon ce qui est souhaité.

Le gain en vitesse résulte du fait qu'en phase d'exploitation, seule la partie comparaison est mise en oeuvre sur des caractéristiques qui présentent une dimension bien inférieure à la taille des données à comparer et qu'une partie des opérations est effectuée en prétraitement lors de la phase de préparation. Il est à noter que temps de mise en oeuvre du premier réseau de neurones R1 sur l'entrée à comparer est négligeable devant le temps de mise en oeuvre du troisième réseau de neurones R3, et ce dans la mesure où le troisième réseau de neurones R3 est utilisé pour chacune des données de la base de données.

La vitesse est augmentée par une diminution du nombre de composantes du vecteur de caractéristiques obtenue après mise en oeuvre du premier réseau de neurones R1. Cela permet aussi de diminuer le nombre de couches du troisième réseau de neurones R3.

Selon une variante, le procédé de détermination est couplé à une autre technique.

Dans une telle variante, le critère de performance souhaité consiste à imposer une première précision minimale pour le nombre de paires correctement identifiées, la mise en oeuvre de l'étape sélection de données conduisant à l'obtention d'une pluralité de données candidates. La phase d'exploitation comporte alors la mise en oeuvre d'un procédé de détermination de l'identité entre les données candidates et la donnée, le procédé de détermination de l'identité correspondant à une deuxième précision minimale pour les paires candidates identifiées, la deuxième précision minimale étant strictement supérieure à la première précision minimale. Typiquement on peut utiliser la solution classique et précise à base de minuties.

De manière imagée, avec le procédé de détermination proposé, il est effectué une détermination grossière (grosse maille) suivie d'une détermination fine (fine maille).

Par rapport à utiliser directement un procédé de détermination avec une grande précision, l'emploi du procédé permet de parvenir plus vite au résultat puisque l'application de la détermination grossière est rapide et élimine la plupart des candidats initiaux.

## Revendications

1. Procédé de détermination de l'appartenance d'une image, dite image à comparer, à une base d'images, le procédé étant mis en oeuvre par ordinateur, le procédé comportant :
- une phase d'apprentissage supervisé, la phase d'apprentissage comportant au moins les étapes de :
- fourniture d'un critère de performance souhaité,
- l'optimisation de trois réseaux de neurones (R1, R2 R3) à partir d'une base d'apprentissage, pour obtenir trois réseaux de neurones (R1, R2, R3) appris,
l'optimisation étant effectuée sous au moins deux contraintes, une première contrainte de respect du critère de performance souhaité et une deuxième contrainte selon laquelle le premier réseau de neurones (R1) et le deuxième réseau de neurones (R2) sont identiques,
la base d'apprentissage comportant des paires d'images d'apprentissage à comparer assorties d'un label binaire, le label binaire étant une information d'identité entre les deux images d'apprentissage,
le premier réseau de neurones (R1) extrayant d'une première image d'une paire de la base d'apprentissage un premier vecteur (V1) de caractéristiques, les caractéristiques du premier vecteur (V1) étant relatives à la première image,
le deuxième réseau de neurones (R2) extrayant d'une deuxième image d'apprentissage de la même paire un deuxième vecteur (V2) de caractéristiques, les caractéristiques du deuxième vecteur (V2) étant relatives à la deuxième image,
le troisième réseau de neurones (R3) effectuant un ensemble d'opérations transformant le couple premier vecteur (V1) et deuxième vecteur (V2) en une valeur binaire (VB) représentative de l'identité entre les deux images d'apprentissage,
- une phase de préparation de la base d'images comportant au moins l'étape de:
- application du premier réseau de neurones (R1) appris sur chaque image de la base d'images pour obtenir des vecteurs de caractéristiques de base, et
- une phase d'exploitation comportant au moins les étapes de :
- utilisation du premier réseau de neurones (R1) sur l'image à comparer, pour obtenir un vecteur de caractéristiques à comparer,
- pour chaque vecteur de caractéristiques de base, obtention d'une valeur binaire représentative de l'identité entre l'image à comparer et une image de la base d'images par application du troisième réseau de neurones (R3) au vecteur de caractéristiques de base et au vecteur de caractéristiques à comparer, et
- sélection des images de la base d'images pour lesquelles la valeur binaire obtenue correspond à une identité entre l'image à comparer et les images de la base d'images,
le critère de performance souhaité consistant à imposer une première précision minimale pour le nombre de paires correctement identifiées, la mise en oeuvre de l'étape sélection d'images conduisant à l'obtention d'une pluralité d'images candidates, la phase d'exploitation comportant la mise en oeuvre d'un procédé de détermination de l'identité entre les images candidates et l'image à comparer, le procédé de détermination de l'identité correspondant à une deuxième précision minimale pour le nombre de paires correctement identifiées, la deuxième précision minimale étant strictement supérieure à la première précision minimale.

2. Procédé selon la revendication 1, dans lequel le troisième réseau de neurones (R3) respecte au moins une propriété choisie dans le groupe de propriétés constitué de :
- une première propriété selon laquelle le troisième réseau de neurones (R3) est un réseau dont les neurones sont entièrement connectés, et
- une deuxième propriété selon laquelle la première opération du troisième réseau de neurones (R3) est la concaténation des deux vecteurs de caractéristiques.

3. Procédé selon la revendication 1 ou 2, dans lequel le premier réseau de neurones (R1) et le deuxième réseau de neurones (R2) respectent au moins une propriété choisie dans le groupe de propriétés constitué de:
- une première propriété selon laquelle le premier réseau de neurones (R1) et le deuxième réseau de neurones (R2) sont des réseaux de neurones comportant au moins une couche de neurones convolutionnels,
- une deuxième propriété selon laquelle le premier réseau de neurones (R1) et le deuxième réseau de neurones (R2) sont des réseaux de neurones comportant au moins une couche de neurones entièrement connectés, et
- une troisième propriété selon laquelle le premier réseau de neurones (R1) et le deuxième réseau de neurones (R2) sont des réseaux de neurones comportant au moins une couche de neurones destinée à effectuer une mise en commun.

4. Procédé selon l'une quelconque des revendications 1 à 3, dans lequel la phase d'apprentissage comporte une étape de choix du nombre de caractéristiques de chaque vecteur (V1, V2), l'étape d'optimisation étant mise en oeuvre avec le nombre choisi.

5. Procédé selon l'une quelconque des revendications 1 à 4 dans lequel la phase d'apprentissage comporte une étape de création de la base d'apprentissage par extraction de paires de la base d'images, les paires extraites étant telles qu'une portion comprise entre 45% et 55% des paires de la base d'apprentissage sont des paires identiques.

6. -Produit programme d'ordinateur (12) comportant un support lisible d'informations (20), sur lequel est mémorisé un programme d'ordinateur comprenant des instructions de programme, le programme d'ordinateur étant chargeable sur une unité de traitement de données (16) et adapté pour entraîner la mise en oeuvre d'un procédé selon l'une quelconque des revendications 1 à 5 lorsque le programme d'ordinateur est mis en oeuvre sur l'unité de traitement des données (16).

7. -Support lisible d'informations (20) comportant des instructions de programme formant un programme d'ordinateur, le programme d'ordinateur étant chargeable sur une unité de traitement de données (16) et adapté pour entraîner la mise en oeuvre d'un procédé selon l'une quelconque des revendications 1 à 5 lorsque le programme d'ordinateur est mis en oeuvre sur l'unité de traitement des données (16).

## Patentansprüche

1. Verfahren zum Bestimmen der Zugehörigkeit eines Bilds, des sogenannten zu vergleichenden Bilds, zu einer Bilddatenbank, wobei das Verfahren computergestützt durchgeführt wird, das Verfahren umfassend:
- eine überwachte Lernphase, die Lernphase umfassend mindestens die folgenden Schritte:
- Bereitstellen eines gewünschten Leistungskriteriums,
- Optimieren von drei neuronalen Netzen (R1, R2, R3) ausgehend von einer Lernbasis, um drei gelernte neuronale Netze (R1, R2, R3) zu erlangen,
wobei die Optimierung unter mindestens zwei Einschränkungen durchgeführt wird, einer ersten Einschränkung, dass das gewünschte Leistungskriterium eingehalten wird, und einer zweiten Einschränkung, dass das erste neuronale Netz (R1) und das zweite neuronale Netz (R2) identisch sind,
die Lernbasis umfassend Paare von zu vergleichenden Lernbildern, die mit einem binären Label versehen sind, wobei das binäre Label Identitätsinformationen zwischen den zwei Lernbildern ist,
wobei das erste neuronale Netz (R1) aus einem ersten Bild eines Paars der Lernbasis einen ersten Vektor (V1) von Merkmalen extrahiert, wobei sich die Merkmale des ersten Vektors (V1) auf das erste Bild beziehen,
das zweite neuronale Netz (R2) aus einem zweiten Trainingsbild desselben Paars einen zweiten Vektor (V2) von Merkmalen extrahiert, wobei sich die Merkmale des zweiten Vektors (V2) auf das zweite Bild beziehen,
wobei das dritte neuronale Netz (R3) eine Reihe von Operationen durchführt, die das Paar aus erstem Vektor (V1) und zweitem Vektor (V2) in einen binären Wert (VB) transformieren, der repräsentativ für die Identität zwischen den zwei Lernbildern ist,
- eine Vorbereitungsphase der Bilddatenbank, umfassend mindestens den folgenden Schritt:
- anwenden des ersten gelernten neuronalen Netzes (R1) auf jedes Bild der Bilddatenbank, um Basismerkmalsvektoren zu erlangen, und
- eine Auswertungsphase, umfassend mindestens die folgenden Schritte:
- Verwenden des ersten neuronalen Netzes (R1) an dem zu vergleichenden Bild, um einen Vektor der zu vergleichenden Merkmale zu erlangen,
- für jeden Basismerkmalsvektor, Erlangen eines binären Werts, der repräsentativ für die Identität zwischen dem zu vergleichenden Bild und einem Bild der Bilddatenbank ist, durch Anwenden des dritten neuronalen Netzes (R3) auf den Basismerkmalsvektor und den Vektor der zu vergleichenden Merkmale, und
- Auswählen der Bilder aus der Bilddatenbank, bei denen der erlangte Binärwert einer Identität zwischen dem zu vergleichenden Bild und den Bildern aus der Bilddatenbank entspricht,
wobei das gewünschte Leistungskriterium darin besteht, eine erste Mindestgenauigkeit für die Anzahl der korrekt identifizierten Paare vorzuschreiben, wobei das Durchführen des Bildauswahlschritts zum Erlangen einer Vielzahl von Kandidatenbildern führt, die Auswertungsphase umfassend das Durchführen eines Verfahrens zum Bestimmen der Identität zwischen den Kandidatenbildern und dem zu vergleichenden Bild, wobei das Verfahren zum Bestimmen der Identität einer zweiten Mindestgenauigkeit für die Anzahl der korrekt identifizierten Paare entspricht, wobei die zweite Mindestgenauigkeit strikt größer ist als die erste Mindestgenauigkeit.

2. Verfahren nach Anspruch 1, wobei das dritte neuronale Netz (R3) mindestens eine Eigenschaft einhält, die ausgewählt ist aus der Gruppe von Eigenschaften, bestehend aus:
- einer ersten Eigenschaft, dass das dritte neuronale Netz (R3) ein Netzwerk ist, dessen Neuronen vollständig verbunden sind, und
- einer zweiten Eigenschaft, nach der die erste Operation des dritten neuronalen Netzes (R3) die Verkettung der zwei Merkmalsvektoren ist.

3. Verfahren nach Anspruch 1 oder 2, wobei das erste neuronale Netz (R1) und das zweite neuronale Netz (R2) mindestens eine Eigenschaft einhalten, die ausgewählt ist aus der Gruppe von Eigenschaften, bestehend aus:
- einer ersten Eigenschaft, gemäß der das erste neuronale Netz (R1) und das zweite neuronale Netz (R2) neuronale Netze sind, die mindestens eine Schicht von Faltungsneuronen umfassen,
- einer zweiten Eigenschaft, gemäß der das erste neuronale Netz (R1) und das zweite neuronale Netz (R2) neuronale Netze mit mindestens einer Schicht vollständig verbundener Neuronen sind, und
- einer dritten Eigenschaft, gemäß der das erste neuronale Netz (R1) und das zweite neuronale Netz (R2) neuronale Netze mit mindestens einer Schicht von Neuronen sind, die dazu bestimmt sind, ein Pooling auszuführen.

4. Verfahren nach einem der Ansprüche 1 bis 3, wobei die Lernphase einen Schritt umfasst, bei dem die Anzahl der Merkmale von jedem Vektor (V1, V2) ausgewählt wird, wobei der Optimierungsschritt mit der ausgewählten Anzahl durchgeführt wird.

5. Verfahren nach einem der Ansprüche 1 bis 4, wobei die Lernphase einen Schritt zum Erstellen der Lernbasis durch Extrahieren von Paaren aus der Bildbasis umfasst, wobei die extrahierten Paare derart sind, dass ein Anteil zwischen 45 % und 55 % der Paare in der Lernbasis identische Paare sind.

6. Computerprogrammprodukt (12), umfassend einen lesbaren Informationsträger (20), auf dem ein Computerprogramm umfassend Programmanweisungen gespeichert ist, wobei das Computerprogramm auf eine Datenverarbeitungseinheit (16) geladen werden kann und angepasst ist, um die Durchführung eines Verfahrens nach einem der Ansprüche 1 bis 5 zu bewirken, wenn das Computerprogramm auf der Datenverarbeitungseinheit (16) durchgeführt wird.

7. Lesbarer Informationsträger (20), umfassend Programmanweisungen, die ein Computerprogramm bilden, wobei das Computerprogramm auf eine Datenverarbeitungseinheit (16) geladen werden kann und angepasst ist, um die Durchführung der Schritte des Verfahrens nach einem der Ansprüche 1 bis 5 zu bewirken, wenn das Computerprogramm auf der Datenverarbeitungseinheit (16) ausgeführt wird.

## Claims

1. A method for determining the membership of an image, called image to be compared, in an image database, the method including:
- a supervised training phase, the training phase including at least the step of:
- providing a desired performance criterion,
- optimizing three neural networks (R1, R2, R3) from a training database, in order to obtain three trained neural networks (R1, R2, R3),
the optimization being done under at least two constraints, a first constraint of compliance with the performance criterion and a second constraint according to which the first neural network (R1) and the second neural network (R2) are identical,
the training database including pairs of training image to be compared associated with a binary label, the binary label being an information of identity between the two training images,
the first neural network (R1) extracting, from a first image of a pair of the training database, a first attribute vector (V1), the attributes of the first vector (V1) being relative to the first image,
the second neural network (R2) extracting, from a second training image of the same pair, a second attribute vector (V2), the attributes of the second vector (V2) being relative to the second image,
the third neural network (R3) performing a set of operations transforming the first vector (V1) and second vector (V2) pair into a binary value (VB) representative of the identity between the two learning image,
- a preparation phase of the database including at least the following step:
- application of the trained first neural network (R1) on each image from the image database to obtain basic attribute vectors, and
- an exploitation phase including at least the step of:
- using the first neural network (R1) on the image to be compared, in order to obtain an attribute vector to be compared,
- for each basic attribute vector, obtaining a binary value representative of the identity between the image to be compared and an image from the image database by applying the third neural network (R3) to the basic attribute vector and the attribute vector to be compared, and
- selecting image from the image database for which the obtained binary value corresponds to an identity between the data to be compared and the image from the image database,
the desired performance criterion consisting of imposing a first minimal precision for the number of pairs correctly identified, the implementation of the image selection step leading to obtaining a plurality of candidate images, the exploitation phase including the implementation of a method for determining the identity between the candidate images and the image to be compared, the method for determining the identity corresponding to a second minimal precision for the number of pairs correctly identified, the second minimal precision being strictly greater than the first minimal precision.

2. The method according to claim 1, wherein the third neural network (R3) complies with at least one property chosen from the group of properties made up of:
- a first property according to which the third neural network (R3) is a network whereof the neurons are completely connected, and
- a second property according to which the first operation of the third neural network (R3) is the concatenation of the two attribute vectors.

3. The method according to claim 1 or 2, wherein the first neural network (R1) and the second neural network (R2) fulfill at least one property chosen from a group of properties made up of:
- a first property according to which the first neural network (R1) and the second neural network (R2) are neural networks including at least one layer of convolutional neurons,
- a second property according to which the first neural network (R1) and the second neural network (R2) are neural networks including at least one layer of fully connected neurons, and
- a third property, according to which the first neural network (R1) and the second neural network (R2) are neural networks including at least one layer of neurons intended to perform pooling.

4. The method according to any one of claims 1 to 3, wherein the training phase includes a step for choosing the number of attributes of each vector (V1, V2), the optimization phase being implemented with the chosen number.

5. The method according to any one of claims 1 to 4, wherein the training phase includes a step for creating the training base by extracting pairs from the database, the extracted pairs being such that a portion of between 45% and 55% of the pairs from the training base are identical pairs.

6. A computer program product (12) including a readable information medium (20), on which a computer program is stored comprising program instructions, the computer program being able to be loaded on a data processing unit (16) and suitable for driving the implementation of a method according to any one of claims 1 to 5 when the computer program is implemented on the data processing unit (16).

7. A readable information medium (20) including program instructions forming a computer program, the computer program being able to be loaded on a data processing unit (16) and suitable for driving the implementation of a method according to any one of claims 1 to 5 when the computer program is implemented on the data processing unit (16).
